# EUROPEAN PATENT APPLICATION

(11) **EP 4 686 993 A1**
(43) Date of publication of application: **04.02.2026**
(21) Application number: 24191535.4
(22) Date of filing: 29.07.2024
(51) Int. Cl.: G05B 19/418

(54) **METHOD AND SYSTEM FOR MONITORING AN AUTOMATION SYSTEM**

(71) Applicant: ABB Schweiz AG, 5400 Baden (CH)
(72) Inventor: Steinhauser, Armin, 4040 Linz (AT); Haudum, Martin, 4020 Linz (AT); Brucker, Stefan, 5020 Salzburg (AT); Rovelli, Dario, 24030 Valbrembo (IT); Weber, Andreas, 5020 Salzburg (AT); Flixeder, Stefan, 4840 Vöcklabruck (AT); Grünbacher, Engelbert, 4840 Vöcklabruck (AT); Weissbacher, Joachim, 5101 Bergheim (AT)
(74) Representative: Patentanwälte Pinter & Weiss OG

(57) **Abstract**

To provide a method and a system monitoring of an automation system (2) using the data provided and generated by the automation system (2) and its components (3, 4, 5, 6, 7) in a simple and efficient way, at least the following steps are carried out:
- capturing data (D) (S101) using a processing unit (8), which are provided and generated by the automation system (2) and/or the components (3, 4, 5, 6, 7) of the automation system (2) while performing the predefined tasks during operation;
- evaluating and analyzing the captured data (D) using Artificial Intelligence methods (S104), to determine a condition of the automation system (2) and/or at least one component (3, 4, 5, 6, 7) of the automation system (2) and/or to determine a deviation of the determined condition of the automation system (2) and/or the at least one component (3, 4, 5, 6, 7) from an expected condition the automation system (2) and/or of at least one component (3, 4, 5, 6, 7); and
- deriving and setting predeterminable actions for the automation system (2) and/or the at least one component (3, 4, 5, 6, 7) of the automation system (2) (S104), depending on the determined condition and/or the determined deviation by the evaluation unit (10).

## Description

### TECHNICAL FIELD OF THE INVENTION

The present invention relates generally to the field of industrial automation systems. In particular, the invention relates to a method for monitoring an automation system, in particular an electromagnetic transport system and/or a robot system and/or an automated machine, wherein the automation system comprises a plurality of components, which are connected by a communication network and which interact and exchange data to provide and perform predefined tasks automatically during manufacturing and/or production processes. Furthermore, the invention relates to a corresponding system for monitoring of an automation system, in particular an electromagnetic transport system or robot system or an automated machine.

### BACKGROUND INFORMATION

Nowadays, automation systems, like e.g., robot systems, electromagnetic transportation systems or automated machines and the like, are widely used in most of the modern manufacturing and production facilities to provide and perform different automated operational tasks (e.g., moving products and/or objects between workstation of a production line, working on objects, transporting objects and/or products in production lines, etc.) during manufacturing and production processes. Such automation systems usually comprise a plurality of different components, which may include mechanical components, electrical components, electromechanical components, electronic components, like e.g., drive units, sensor units, actuators, machine units, control units, controllers, observer units, etc. These components interact to perform the different predefined operational tasks during manufacturing and production processes, wherein the interactions of the different component of an automation system may change in time and/or space depending on the operational task carried out by the automation system. The components of the automation system are usually connected via a (internal) communication network, in particular a fieldbus system to exchange data, like e.g., sensor values detected by sensor units and/or control signals generated by control units and/or controllers to control the actuators and/or to regulate control loops of drive units and/or actuators or error messages.

In the simplest embodiment, for example, an automation system may be a simple automated machine, which comprises at least one machine unit, at least one drive unit and/or actuator, which drives the at least one machine unit, at least one sensor unit to detect sensor values, and at least one control unit, which controls the drive unit and/or the actuator on the basis of the detected sensor values in such a way, that a predefined operational task is executed by the machine unit. Usually, automation systems are more complex systems comprising numerous components (e.g., drive units, actuators, machine units, sensor units, controllers, observer units, moveable parts) and at least one central control unit (e.g., Programmable logic controller or short PLC), which controls the automation system based on the data provided by the different components. Sometimes, large automations system may also have a large spatial extent apart from a high number of components.

An exemplary embodiment of such a complex automation system is, for example, an electromagnetic transport system, such as long stator linear motors (LLM for short) or planar motors (PM for short). In LLMs and PMs, products and/or objects to be transported are picked up and moved by a potentially large number of movers, which are also referred to as "shuttle" or "transport unit". LLMs and PMs, their applications and their mode of operation are well known from the state of the art. Both - a LLM and a PM - comprise at least one shuttle, and a fixed part (the stator), with respect to which the at least one shuttle is moved due to interacting magnet fields in at least one direction of movement. For this purpose, drive magnets, either electromagnets or permanent magnets, are arranged on one of the parts, e.g., the shuttle. The drive magnets interact with the magnetic field generated by energized drive coils on the other part (e.g., the stator) to generate a propulsive force. If a voltage is applied to the drive coils, a magnetic field is generated, which interacts with the magnetic field of the drive magnets, thereby generating a force, which moves the at least one shuttle. A moving magnetic field is generated by appropriate control (e.g. provided by at least one corresponding controller) of energizing the drive coils to move the shuttle along a predefined path along a transport track or within a transport plane.

As described in WO 2013/143783 A1, for example, a LLM motor generally comprises a stator (also referred to as a "long stator linear motor stator" or "LLM stator"), which is usually composed of a large number of stator segments. The drive coils are usually arranged in fixed positions to each other on the stator or on the stator segments. The stator segments can have different geometries (e.g., straight lines, curves, track switches, dual tracks, etc.) and can be assembled into a desired stator by lining them up accordingly. The stator then forms the transport track or transport path, along which at least one shuttle, usually several shuttles, is moved. For this purpose, a number of drive magnets is arranged on the mover, wherein the magnetic field of the drive magnets interact with the electromagnetic field generated by energizing the drive coils of the stator. The transport units are magnetically held and guided along the stator, by using e.g., corresponding guiding elements along the stator (e.g., guide rails) and on the transport units (e.g., rollers).

PMs, which are used, for example, in production processes or transport processes requiring complex motion profiles, also have a stator like long stator linear motors. However, the stator of the planar motor, which often consists of several stator modules, forms a transport plane, in which one or more shuttles can be moved at least two-dimensionally. The drive coils of the planar motor are therefore arranged in the transport plane, in some embodiments also in several planes. A drive force acting on the shuttle is generated - similar to the long stator linear motor - to move the shuttle e.g., along a predefined transport path within the transport plane. For this purpose, a magnetic field, which is generated e.g., by drive magnets of the shuttle, interacts with a magnetic field of the stator generated by energizing the drive coils accordingly. US 9,202,719 B2 or WO 2019/129576 A1, for example, disclose the basic structure and mode of operation of a PM.

Another embodiment is, for example, a robot system, in which serial and/or parallel kinematics usually with several axles (which kinematics may also collectively be referred to as robots) are capable of carrying out a complex series of actions automatically The at least one robot of the robot system comprises different drive units (e.g., rotary drives, linear drives, sensor units, manipulators and/or effectors, etc.) and may be guided by a control unit. Usually, robots are used for handling, assembling and/or processing workpieces and/or objects during a manufacturing or production process. Industrial robots generally comprise at least a manipulator (robot arm), a control unit and an effector (tool, gripper, etc.). Robots are often equipped with various sensor units. Once programmed, the robot is able to carry out a work process autonomously or to vary the execution of the task within limits depending on sensor values provides by the sensor units.

In principle, an automation system in the sense of this application can be understood as any application, in which different drives and drive types (e.g., rotary drives, linear and/or planar motors) work together in any combination and merged data of the different components are processed to fulfill specified tasks and/or carry out complex series of actions during a manufacturing or production process.

However, there are several challenges in monitoring an overall and proper functionality of an automation system, in particular of a complex automation system like e.g. an electromagnetic transport system or a robot system, on a large scale. One of the challenges is that in such a complex automation system the proper functionality, in particular during normal operation after commissioning, depends on parameters (e.g. mechanical parameters, electrical parameters, control parameters, function parameters, operating parameters, etc.), which may change over time due to e.g. environment factors (e.g. temperature, dirt, etc.) and/or wear, etc., and which directly and indirectly influence the interaction of the different components and thus the functionality of the automation system. So, the change of these parameters over time has to be monitored or at least checked at regular intervals to ensure the functionality as well as a safe and failure-free operation of the automation system and to prevent damage of the automation system.

Currently, the mechanical parameters of an automation system, for example, are measured using appropriate measurement equipment, which is often specially manufactured, to check proper assembly of the automation system before commissioning. One possibility to get a snapshot of a current mechanical condition of an automation system is, for example, to set up the automation system in the best possible way and to document its functionality and setup by a large number of measurements as references before delivery. After delivery and installation of the automation system at e.g. a customer's site, the measurements are repeated and compared with the documented references. This may ensure that the automation system has been properly assembled and installed and that the specified functionality will be carried out correctly, but in particular the large number of measurements before delivery is quite time consuming and costly. Furthermore, especially manual measurement may be error-prone.

But usually, after assembly and acceptance, quite often no further checks are carried out during normal operation. Usually, changes in the behavior of components of the automation system are only discovered, when the automation system malfunctions. In the event of such a malfunction, it may be necessary that e.g. a specialist or expert has to analyze the automation system to solve the problem. This may lead to production downtimes of the automation system and is usually coupled with high costs.

Furthermore, automation systems are generally subject to a certain amount of wear. Over time, wear may lead to changes of mechanical properties, which may result in a deterioration in the functionality of the automation system, additional losses and/or a reduction in efficiency, malfunctions and even in damages of the automation system.

For example, in electromagnetic transport systems in the form of LLMs, the shuttles are held magnetically on the track formed by the stator and guided by guiding elements (e.g., rollers) on the shuttle. The movement of the shuttle on the track of the transport system inevitably leads to signs of wear, which may vary depending on the movement profile of the shuttle and environment factors (e.g., temperature, dirt, etc.). The wear of the guiding elements (e.g., reduction of the diameter of the rollers) of a shuttle may lead to a critical reduction of the air gap between the shuttle and the surface of the stator or a stator segment, which may result in mechanical damage of the transport system, for example. Currently, the guiding elements of the shuttles are checked by manual measurement or by using expensive additional sensor unit in the transport system, for example, and replaced in fixed intervals which are selected well before a possible wear limit, to ensure a safe operation of the transport system.

In an automated machine (e.g. robots) with axles, which are driven by motor-gearbox combinations or linear motors, for example, the mechanical properties of the motor-gearbox combinations or the linear motors may change over time due to wear. This may be, for example, a change of friction, a bearing becoming sluggish over time or a coupling changing its stiffness over the time. These changes may result in changes of the inherent frequency of the system or a changed load condition.

Furthermore, it may be possible that the mechanical properties or condition of the automation system may change in such a way that an originally well-adjusted controller of automation system causes vibrations in the automation system. These vibrations may result in an increase of losses in the drive unit or in damages of the automation system either in short-term or long-term.

In automation systems, a large amount of data (e.g. sensor values, control signals, commands, control parameters, error messages, etc.) is available, which is generated/measured by the various components of the automation system (e.g. sensor units, controllers, control units, observer units, etc.) with high and/or low frequency. I.e., that this data (especially in complex automation systems) is generated in large quantities, with great variety and usually at high speed and is often too weakly structured to be processed and evaluated manually or using conventional data processing methods (e.g., static data evaluation methods, visualization programs, etc.). Such data is also referred to as "Big data", for example, which requires special approaches to be processed and evaluated.

However, at the moment, this amount of data ("Big data") provided by the automation system is not used for monitoring purposes and for making adjustments to the automation system to ensure the functionality and safe operation of the automation system. Currently, the automation system usually has to be stopped to check the mechanical properties, for example, mainly manually with e.g. specially manufactured measurement equipment. But manually carried out checks may lead to measurement faults and misjudgment of the present condition of the automation system. Diagnoses of electrical and/or electronic components and/or the communication connections may be done with additional software, for example, requiring additional resources on the automation system which has to be taken into account during designing the automation system and/or may result in modifying the software of the automation system in some case.

Since this process of checking the automation system is quite time consuming, error prone, quite costly and often requires experts to draw insights from data, checks of the automation system are hardly carried out and any problem that may arise from changes in mechanical, electrical, electromechanical and/or electronic components of the automation system may not be detected in good time.

### SUMMARY

Against this background, the present invention is based on the task to provide a method for monitoring an automation system, in particular during normal operation, using data provided and generated by the automation system in a simple and efficient way as well as a corresponding system for monitoring the automation system.

These and other objectives are solved by a method and a system according to the independent claims. Advantageous embodiments of the present invention are described by the dependent claims.

According to the invention, these and other objectives are achieved by a method for monitoring an automation system, which at least comprises the following steps:
- capturing and collecting data, which are provided and generated by the automation system and/or the components of the automation system while performing the predefined tasks during operation;
- analyzing and evaluating the captured data using Artificial Intelligence methods, to determine a condition of the automation system and/or of at least one component of the automation system and/or to determine a deviation of the determined condition of the automation system and/or of the at least one component from an expected condition of the automation system and/or the at least one component; and
- deriving and setting predeterminable actions for the automation system and/or the at least one component of the automation system, depending on the determined condition and/or the determined deviation.

The main aspect of the present invention is that a continuous monitoring of the automation system and/or of at least one component of the automation system, in particular during normal operation, is provided in a simple and efficient way, which is easy to implement within an automation system. Using the method according to the invention, it is not necessary to stop the automation system, use particular measurement equipment to detect wear or to recognize the reasons for malfunctions and/or for abnormal behavior of the automation system during operation and/or to install additional software for diagnosis. Since the method according to the invention captures and evaluates data provided by the automation system using Artificial Intelligence method or short Al methods automatically, measurement faults and misjudgment of the present condition of the automation system may also be reduced compared to manual measurement. Ideally, an Artificial Neuronal Network, decision trees, support-vector machines, Gaussian processes and/or so-called random forests are used as Al methods, wherein the selection of the Al method to be used for data analysis and evaluation depends on the particular use case of the method according the invention, e.g. to recognize certain patterns within the data an Artificial Intelligence Network or support-vector machines may be used, whereas decision trees, random forests or Gaussian processes may be used to derive or predict time dependent developments (e.g., wear), for example. Decision trees, which are tree-like models, are used to automatically classify data and to derive formal rules from empirical knowledge. Random forests or random decision forests are based on decision trees and are an ensemble learning method for classification, regression and other tasks that operates by construction a multitude of decision trees that are as uncorrelated as possible at training time. Gaussian processes are a versatile tool for handling real measurement data D and for modeling functions, in particular for modelling the behavior of non-deterministic processes and/or systems based on stochastic data and/or observations.

Since the method can be carried out continuously and/or at regular time intervals, damages of the automation system may be prevented, because malfunctions - in particular of the interacting components of the automation system - and/or changes (e.g., increase friction, vibrations, etc.) in the automation system due to normal operation may be recognized early and in-time and the findings of the data analysis and evaluation may be used for improvement measures and/or predefined actions to improve the operation of the automation system. The method helps to adapt the automation system or at least single components to reduce additional loss and to increase the efficiency of the automation system. Furthermore, the method may help to establish predictive maintenance instead of preventive maintenance, wherein components of the automation system are no longer replaced at fixed time intervals, but depending on their respective determined condition.

Ideally, the method according to the invention includes a wide variety of components of an automation system, such as system-internal sensors, controllers, observer units, segment units, shuttle units, drives, etc., as well as their internal exchange of data with each other and with a higher-level control unit. This means that even complex automation systems, such as large electromagnetic transport systems, robot systems, production lines with several or distributed automation systems, etc. can be monitored very easily and efficiently. The method according to the invention thus offers a simple, efficient and cost-effective way to monitor different automation systems - from simple automated machines to complex automation systems - and to determine the actual condition of the automation system or of at least individual components and to make predictions, e.g. with regard to wear or the remaining service life of components.

It is advantageous, if the captured data is preprocessed before being analyzed and evaluated using Al methods. The preprocessing of the captured data may reduce the effort during the analysis and evaluation of the captured data, e.g. by avoiding repeated data preparation.

Furthermore, the preprocessing can reduce storage capacity for storing the data and/or the bandwidth necessary for transferring the data.

It may also be favorable, if the captured and/or preprocessed data is stored before being analyzed and evaluated using Al methods. This means that the data is available at any time for analysis and evaluation using Al methods. Additionally, historical data can easily be used for the analysis and evaluation. The capturing and collecting of the data generated and provided by the automation system and/or its components as well as the analyzing and evaluation of the captured data using AI methods can be carried out continuously and/or at regular time intervals and/or at predefined time intervals. The capturing of the data may also take place at random time intervals, e.g., whenever data important for monitoring and/or by a particular component important to be monitored is generated.

Furthermore, it may be advantageous, if the determined condition of the of the automation system and/or of at least one component of the automation system and/or the determined deviation of the determined condition of the automation system and/or of the at least one component from the expected condition is output and displayed. Ideally, this simplifies diagnostics of failures, malfunctions and/or non-optimal interaction of components of the automation system. In addition, predefined actions or recommendations for action can also be issued based on the analysis and evaluation of the data, e.g. to make it easier to resolve a problem or error in the automation system.

In a preferred embodiment of the method, the expected condition of the automation system and/or the at least one component of the automation system is determined by at least capturing predefined data during a test operation or test phase of the automation system and by analyzing and evaluating the captured predefined data during the test operation or test phase using AI methods. The test phase may ideally also be used to train the AI methods used for analyzing and evaluating the captured data with the help of predefined data. Additionally, an evaluation criterion can be defined during the test operation or test phase, which can be used for evaluating the deviation between the determined condition of the automation system and/or the at least one component of the automation system and the expected condition.

In another preferred embodiment, the determined deviation between the determined condition of the automation system and/or the at least one component of the automation system and the expected condition is minimized as a predefined action, by varying at least one configuration parameter of the automation system, in particular of a controller and/or an observer unit and/or a compensation unit of the automation system. Ideally, the at least one configuration parameter of the automation system, in particular of a controller and/or an observer unit and/or a compensation unit, of the automation system, is varied in accordance with a predefined adaption rule like e.g., stochastic parameterization of the configuration parameter with at least one transition, deterministic laws, etc. The variation of the at least one configuration parameter of the automation system, thus, may ideally led to an improvement and/or optimization of the operation of the automation system.

Furthermore, the objectives given above are achieved by a system for monitoring an automation system. The system at least comprises a processing unit and an evaluation unit. The processing unit is configured to configured to capture data, which are generated and provided by the automation system and/or the components of the automation system while performing predefined tasks during operation (e.g., moving objects and/or products, handling objects and/or products, working on objects and/or products, etc.). The evaluation unit is configured to analyze and evaluate the data captured by the processing unit using Artificial Intelligence methods or short AI methods to determine a condition of at least one component of the automation system and/or of the automation system. Additionally or alternatively, the evaluation unit can determine a deviation of the condition of at least one component and/or the automation system from an expected condition of at least one component and/or the automation system, by analyzing the data captured by the processing unit using Al methods. Furthermore, the evaluation unit is configured to derive actions from the determined condition and/or the determined deviation for the automation system and/or the at least one component of the automation system. These actions can range from visualizing the determined condition, issuing error messages and/or instructions, indicating malfunctioning components, issuing triggering maintenance measures and up to power reduction or even a stop of the automation system.

The system ideally provides monitoring and analysis of the automation system during operation and without any loss of time. Problems, malfunctions and/or wear of certain components may be recognized and solved as soon as possible. By using the system for monitoring the automation system, which is at least partly integrated into the automation system, the big amount of data generated and provided by the automation system can easily and quickly analyzed and the condition of the automation system or single components, e.g. mechanical and/or electrical components can be evaluated. No additional measurement equipment or software is necessary as well as no stops of the automation system. Furthermore, the system for monitoring the automation system can be used for a wide range of use cases - during commissioning of the automation system and during normal operation to detect malfunction and/or wear of components and even to optimize and adapt the automation system.

It is advantageous, when the processing unit is configured to preprocess the data received from the automation system and/or the components of the automation system. The preprocessing of the data by the processing unit can reduce storage capacity for storing the data. It may also reduce a bandwidth necessary for transferring the data, if the data are transferred from the processing unit to e.g. a storage unit or via a communication network. Furthermore, repeated data preparation is avoided.

In a preferred embodiment, the evaluation unit is implemented and executable on the processing unit. I.e., that the evaluation of the captured data is done locally - on the processing unit. Ideally, the analysis results - i.e., the determined condition of the automation system or of the at least one component and/or the deviation of the determined condition from an expected condition - is only available locally enhancing the security of the system. Alternatively or even additionally, the evaluation unit may be implemented as a cloud-based application or service being executable on a cloud server. This is especially useful, if larger amounts of data or data from large and/or distributed automation system has to be analyzed. Thus, the evaluation unit can use the resources of a cloud-based computer system to analyze the high amount of data and data provided and generated by large and/or distributed automation systems can be merged. Furthermore, the analysis results provided by the cloud-based evaluation unit are highly available and can be used, for example, by the manufacturer of the automation system for maintenance and/or just-in delivery of spare-part.

It is favorable, if the processing unit is implemented as separate unit, which is linked to the automation system, in particular to a higher-level control unit of the automation system, via a communication connection, wherein the control unit provides the processing unit with the data generated by the automation system and/or its components during operation. Ideally, the processing unit is designed as so-called Edge device or Edge computer which has a link to a system-internal network (e.g. for the communication with the control unit) and a link to a system-external network (e.g. the Internet). Alternatively, the processing unit may be integrated into the higher-level control unit of the automation system or in any other server structure available in the automation system being designed as virtual processing unit.

In a preferred embodiment, the system also comprises a storage unit for storing the data at least captured by the processing unit, wherein the storage unit is linked to the processing unit via a communication connection. Ideally, the storage unit is designed as database, in particular as relation database, which provides a previously known and rigid structure. The storage unit can be implemented as local storage unit, e.g. directly linked to the processing unit, and/or as a cloud-based storage, which is highly available and provides high storage resources.

Furthermore, it is advantageous, if the system comprises a display unit being configured to output and display at least the condition of at least one component and/or the automation system determined by the evaluation unit and/or the deviation of the condition of at least one component and/or the automation system from an expected condition, determined by the evaluation unit. The display unit can be designed as local display unit. It is also possible that the display unit is designed as cloud-based application having a web-based user-interface hosted on a cloud server. A local display unit and a cloud-based display unit can be used either alternatively or in parallel.

### BRIEF DESCRIPTION OF THE DRAWINGS

The present invention is described below in greater detail with reference to Figs. 1 to 6, which show schematic and non-limiting advantageous embodiments of the invention by way of example. In the drawings:
Fig.1 shows a block-diagram of a system for monitoring an automation system, according to an embodiment of the present invention;
Fig. 2 shows a block-diagram of the system for monitoring an automation system, according to another embodiment of the present invention;
Fig. 3 shows a block-diagram of the system for monitoring an automation system, according to a third embodiment of the present invention;
Fig. 4 shows a flowchart of a method for monitoring an automation system according to the embodiment of the present invention;
Fig.5 shows a flowchart for determining an expected condition of the automation system used as a reference for the method for monitoring an automation system according to the embodiment of the present invention;
Fig. 6 shows a flowchart for adapting and/or optimizing the automation system using the method for monitoring an automation system according to the embodiment of the present invention.

### DETAILED DESCRIPTION

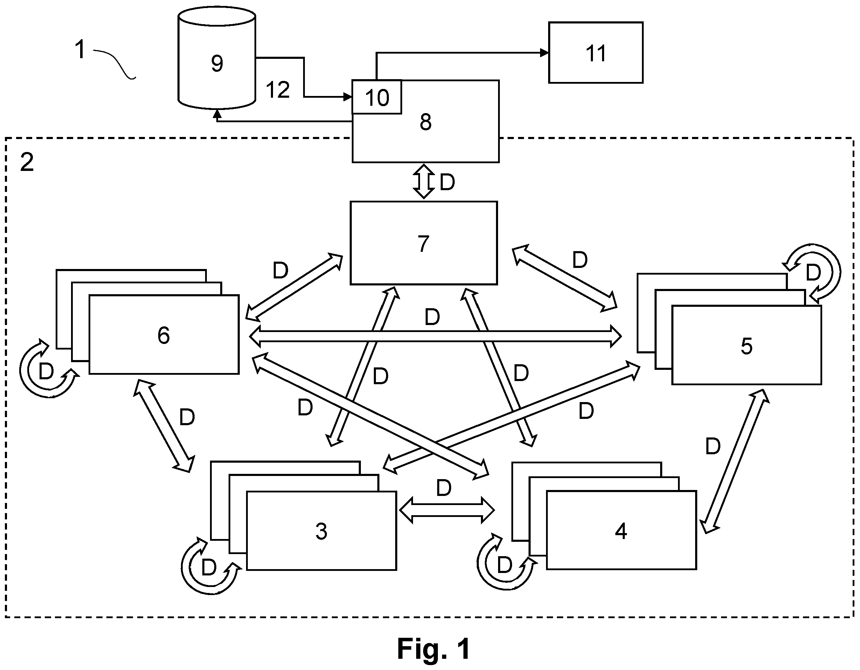

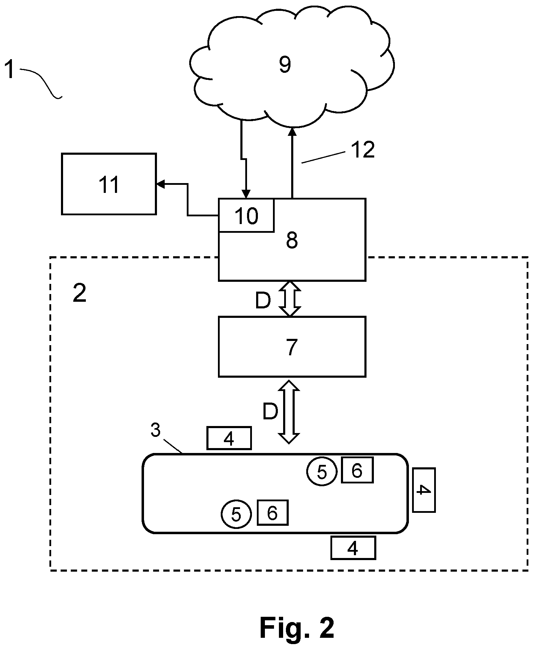

Figure 1 schematically shows an exemplary embodiment of a system 1 for monitoring an automation system 2. The monitored automation system 2, 21 may be an electromagnetic transport system, as exemplary shown in Figures 1 and 2, a robot system 22, 23, an automated machine and/or a combination of these systems 2, 21, 22, 23, e.g., to form a production line. The automation system 2, like e.g. an electromagnetic transport system in the form of a LLM or PM, includes a plurality of components 3, 4, 5, 6, like e.g., a stator comprising at least one stator segment 3 forming a transport track or transport plane, shuttles 4 moving along a predefined path on the transport track or within the transport plane, sensor units 5 forming a system internal sensor system providing a plurality of sensor data (e.g. position values, temperature values, etc.) and several system internal controllers 6 (e.g., segment controllers, observer units, compensation units, etc.) which provide data (e.g., signals, commands, etc.) to regulate and/or control single components 3, 4 (e.g., the position or movement of a shuttle 4) and/or parts of the components 3 (e.g. energizing drive coils of a stator segment 3) and/or sub-sets of components 3, 4 of the automation systems 2. Furthermore, the automation system 2 comprises at least one central and/or higher-level control unit 7 (e.g., PLC), which controls the automation system 2 or at least parts of the automation system 2 based on data D (e.g. sensor data, control signal, commands, etc.) provided by the plurality of the other components 3, 4, 5, 6 of the automation system 2.

All these components 3, 4, 5, 6, 7 - i.e., the stator segments 3, the shuttles 4, the sensor units 5, the controllers 6 and the control unit 7 are connected by a communication network, in particular a fieldbus system, to exchange data D and to interact with each other to provide and automatically perform predefined task during manufacturing and/or production processes. Such predefined tasks are, for example, moving products and/or objects between workstations, handling and/or working on products and/or objects in workstation, and/or other tasks necessary during a manufacturing and/or production process. Due to the complexity of the setup of the automation system 2, the different components 3, 4, 5, 6, 7 - i.e., the shuttles 4, the stator segments 3, the sensor units 5 and/or controllers 6 - of the automation system 2 have to exchange data D with each other, symbolized by arrows D in Figure 1, during operation, wherein the interaction of the components 3, 4, 5, 6, 7 constantly changes in terms of time and location depending of the predefined task to be performed.

For example, while the shuttles 4 are moved along the predefined transport path of an automation system 2 like an electromagnetic transport system in the form of LLM or PM, controllers 6 may access different shuttles 4, which in turn interact with different stator segments 3 and different sensor units 5 (e.g. position sensors, measurement units). These sensor units 5 deliver sensor data or measurement data, for example, to controllers 6. Furthermore, the data D may be provided to the central and/or higher-level control unit 7 for control of the automation system 2. To enable and ensure a proper operation of the automation system 2, all these components 3, 4, 5, 6, 7 have to be coordinated accordingly at all times, wherein the interaction of the components 3, 4, 5, 6, 7 varies in time and location. This requires a wide variety of data D to be generated and exchanged by components 3, 4, 5, 6, 7. The components 3, 4, 5, 6, 7 may generate and exchange function parameters like e.g., sensor data, measurement data, input/output data from controllers, control data, signals, etc. Furthermore, the components 3, 4, 5, 6, 7 may also have different configuration parameters, in particular controllers 6 may have configuration parameters, which are adaptable over time. All these data D, generated and exchanged in large quantities, with great variety, weakly structured and often at high speed, may have large dimensional ranges and represents the many properties and functions of the automation system 2 and/or of the individual components 3, 4, 5, 6, 7.

For monitoring an automation system 2, in particular for checking a current condition and for adapting at least some of the configuration parameter (e.g. of controllers 6 or in particular compensation units), if necessary, to optimize the operation of the automation system 2, the system 1 comprises a processing unit 8. Ideally, a so-called edge device is used as processing unit 8. The edge device 8 is linked to the automation system 2, in particular to the control unit 7, via an operational technology network or a system-internal network. Usually, an edge device 8 also provides a connection to a system-external network (e.g., the Internet) and thus provides an entry point to the internal communication network of the automation system 2. The processing unit 8 or edge device 8 can be implemented on a separate unit, for example on an industrial PC. It is also possible that the processing unit 8 or edge device 8 is integrated into the control unit 7 (e.g., PLC) or into another server structure available in the automation system 2.

In Figure 1, an exemplary embodiment of the system 1 is illustrated, which provides an isolated operation of the system 1 for monitoring the automation system 2. The system 1 for monitoring the automation system 2 represents a closed system which may be used for security reasons - the method for monitoring the automation system 2 is only done within the system 1. The isolated operation of the system 1 for monitoring the automation system 2 may also be used in case an Internet connection is not available, for example. The processing unit 8 or edge device 8 is designed as a separate unit, for example, and linked to the control unit 7 via a communication connection of the system-internal network. Usually, Ethernet is used for the connection of the processing unit 8 to the control unit 7. So, any protocol, usually TCP/IP, can be used for a data transfer between the control unit 7 and the processing unit 8.

The processing unit 8 is configured to capture the data D, which are generated and provided by the automation system 2 or its components 3, 4, 5, 6, 7 during operation. These data D are representative for performing the predefined tasks by the automation system 2 or for the interaction of the components 3, 4, 5, 6, 7, while performing the predefined tasks during the operation of the automation system 2. Furthermore, the processing unit 8 may also be configured to preprocess the data D received from the automation system 2, in particular to reduce necessary storage capacity for storing the data D, the bandwidth for transferring the data D and/or repeated data preparation.

Furthermore, the system 1 for monitoring the automation system 2 comprises a storage unit 9 for storing the data D captured and preprocessed, if necessary, by the processing unit 8. In this way, the captured data D is available for analyzing by an evaluation unit 10 at any time. The storage unit 9 may be designed as a database 9 integrated into the processing unit 9 or locally linked to the processing unit 8. Ideally, the storage unit 9 is designed as relational database 9, which provides relational operators to manipulate the data D in tabular form and presents the data D as relations, usually in tabular form, helping to store the captured data D in a structured form, which may be analyzed by the evaluation unit 10 more easily.

The system 1 for monitoring the automation system 2 also comprises the evaluation unit 10 for analyzing the data D captured by the processing unit 8 and stored in the storage unit 9. The evaluation unit 10 is, for example, implemented on and/or integrated into the processing unit 8. The evaluation unit 10 may be a software component (e.g., an executable program or script running on the processing unit 8). The evaluation unit 10 analyzes the data D received from the automation system 2 to determine a condition of the automation system 2 and/or of at least one component 3, 4, 5, 6, 7 of the automation system 2. The evaluation unit 10 uses Artificial Intelligence (short: Al) methods for the analyzation of the captured data D. By using AI methods to evaluate the captured data D, the evaluation unit 10 may recognize patterns, correlations, interactions between the components 3, 4, 5, 6, 7 and/or behaviors of the automation system 2 or of at least one component 3, 4, 5, 6, 7 of the automation system 2. By recognizing these patterns, correlations, interactions and/or behaviors, the evaluation unit 10 may also determine a current condition of the automation system 2 and/or the at least one component 3, 4, 5, 6, 7. Furthermore, the evaluation unit 10 can also determine deviations from an expected condition of the automation system 2 and/or at least one component 3, 4, 5, 6, 7 used as reference and/or predict future trends based on temporal tendencies recognized in the captured data D. Furthermore, the evaluation unit 10 may be configured to derive possible actions (e.g., issuing an error message, indicating a malfunctioning component 3, 4, 5, 6; a power reduction or stop of the automation system 2, etc.) from the analysis results.

Furthermore, the system 1 for monitoring the automation system 2 comprises a display unit 11, which is linked to the processing unit 8 and designed as a local display unit 11, for example. The results of the analysis by the evaluation unit 10 can be output and displayed on the display unit 11. The condition of the automation system 2 or of at least one component 3, 4, 5, 6, 7 determined by the evaluation unit 10 from the captured data D may be output and visualized on the display unit 11, for example. It is also possible to display suggested actions or error messages, in case a deviation from the expected condition is determined by the evaluation unit 10.

Figure 2 illustrates another embodiment of the system 1 for monitoring an automation system 2, for example an electromagnetic transport system in the form of a LLM or PM. The automation system 2 again comprises a plurality of components 3, 4, 5, 6, 7, like e.g., a stator 3 consisting of several stator segments, shuttles 4 moving along a predefined transport path on the stator 3 forming the transport track or the transport plane, sensor units 5 to measure sensor data, controllers 6 for regulating or controlling single stator segments, etc. and a central and/or higher-level control unit 7. The data D generated by the components 3, 4, 5, 6, 7 of the automation system 2 are captured by the processing unit 8 of the system 1 for monitoring the automation system 2. Therefore, the processing unit 8 is, for example, linked to the control unit 7 of the automation system 2. The processing unit 8 is an edge device, for example, providing access to the system-internal network of the automation system 2 and to the system-external network, e.g., the Internet via a communication link 12. As shown in Figure 1, the evaluation unit 10 for analyzing the data D using AI methods is again implemented on the processing unit 8. The system 1 for monitoring the automation system 2 also comprises a display unit 11, which is arranged locally and connected to the processing unit 8, for example.

The storage unit 9 of the system 1 for monitoring the automation system 2 is implemented on a cloud server or designed as a cloud storage 9 in the embodiment, exemplary shown in Fig-ure 2. I.e., the data D are transferred from the processing unit 8 to the storage unit 9 or cloud storage 9 after being captured and preprocessed, if necessary, by the processing unit 8. The evaluation unit 10 can then retrieve the data D for analysis using Al methods from the cloud storage 9, for example, via the communication connection 12 and analyze the data D locally. This embodiment of the system 1 for monitoring the automation system 2 provides local data analysis and a local availability of the analysis results, which enhanced the security of the system 1, as well as the possibility to store a large amount of data D using a cloud storage 9, which offers the on-demand availability of storage resources. Additionally, the cloud stored data D are highly available, e.g. via an Internet connection and could be used by a manufacturer of the automation system 2 for further evaluation. The processing unit 8 may have a local storage unit (e.g. a persistent memory unit) to temporarily store captured and/or preprocessed data D or data D to be analyzed by the evaluation unit 10.

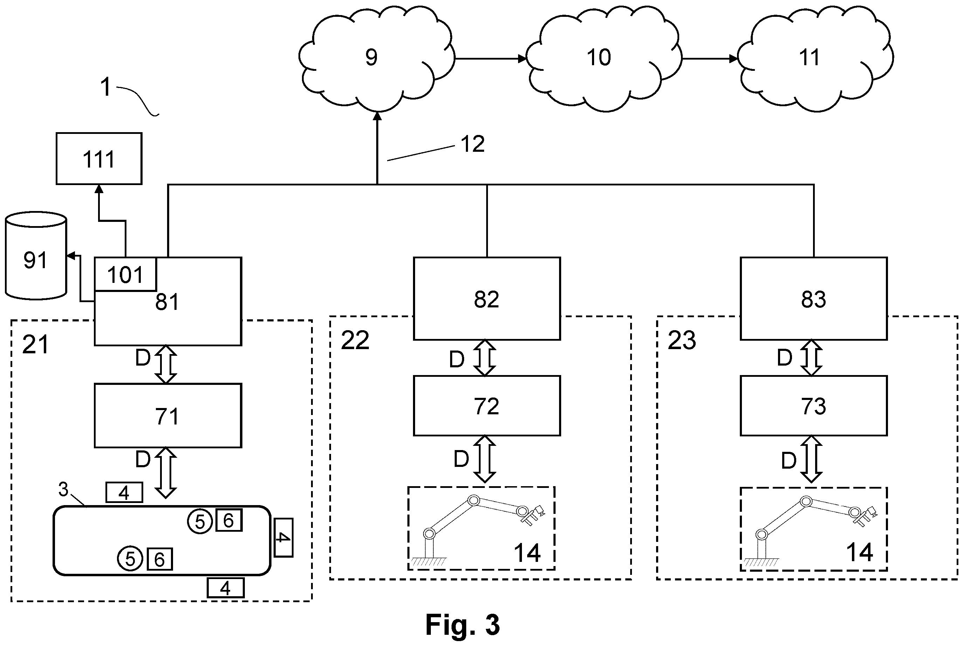

Figure 3 shows an exemplary third embodiment of the system 1 for monitoring automation systems 21, 22, 23 - e.g., a combination of at least two automation systems 21, 22, 23 like a production line, or automation systems 21, 22, 23 installed at different locations.

The system 1 may monitor, for example, an electromagnetic transport system 21, a first and a second robot system 22, 23 comprising at least one robot 14. These automation systems 21, 22, 23 may form a production line in plant or may be located at different location in a plant or at different plants. There is a processing unit 81, 82, 83 for each automation system 21, 22, 23 - e.g., an edge device, which is linked to a central and/or higher-level control unit 71, 72, 73 of the respective automation system 21, 22, 23. The respective processing unit 81, 82, 83 captures the data D provided and generated by the respective automation system 21, 22, 23. A first processing unit 81, for example, captures the data D of the transport system 21. A second processing unit 82 captures the data D of the first robot system 22 and a third processing unit 83 captures the data D of the second robot system 23. Each processing unit 81, 82, 83, being designed as edge device, for example, has a communication connection 12 to a system-external network, e.g., the Internet. After capturing and preprocessing, if necessary, the data D of the respective automation system 21, 22 23, the respective processing unit 81, 82, 83 transfers the data D via the communication connection 12 to the storage unit 9, which is implemented on a cloud server or designed as cloud storage 9. The evaluation unit 10 is also designed as a cloud-based application, e.g. implemented on a cloud server. So, the evaluation unit 10 using Al methods can use the resources of a cloud-based computer system to analyze the high amount of data D provided by complex automation systems 21, 22, 23. Additionally, the data D provided and generated by the different automation systems 21, 22, 23 can be merged. Furthermore, a manufacturer can monitor several automation systems 21, 22, 23 and react accordingly and/or provide automatic and/or just-in time delivery of spare parts. Furthermore, the analysis results provided by the cloud-based evaluation unit 10 are highly available.

The system 1 can also comprise a display unit 11, which is designed as a cloud-based application, as well. I.e., the results of the analysis of the evaluation unit 10 is provided as web service, for example, using a user interface hosted on a cloud server and can be retrieved e.g. via the Internet.

Additionally, it may still be possible to monitor each automation system 21, 22, 23 locally. I.e., apart for the cloud-based implementation of the storage unit 9, the evaluation unit 10 and the display unit 11, each automation system 21, 22, 23 may have its local system 1 for monitoring. As exemplary shown for the electromagnetic transport system 21, the first processing unit 81 of the electromagnetic transport system 21 may have a local evaluation unit 81 using Al methods for local analysis of the data D provided and generated by the electromagnetic transport system 21 and captured by the first processing unit 81. Furthermore, the local system 1 for monitoring may comprise a local storage unit 91 and a local display unit 111 for displaying analysis results of the local evaluation unit 101, for example. The storage unit 91 may be a persistent memory unit integrated in the first processing unit 81, for example. It is also possible that a local data base 91 is used as local storage unit 91, in which the data D of the monitored transport system 21 are stored locally, additionally to be transferred to the cloud storage 9. The local evaluation unit 101 can then retrieve the data D to be analyzed as well as from the local storage unit 91 and from the cloud-based storage unit 9.

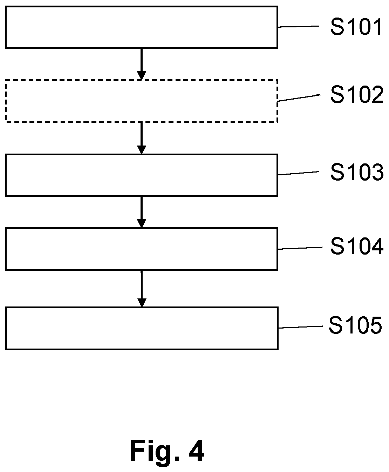

Figure 4 exemplary illustrates a flowchart of an embodiment of the method for monitoring an automation system 2 according to the present invention.

The method for monitoring an automation system 2 starts with a capturing step S101. During the capturing step S101 data D of the automation system 2 are captured and collected by the processing unit 8. The data D may be recorded at regular or even predefined time intervals. It is also possible to record the data D at random intervals. Generally, it is important that the data D is captured on a regular basis or that the capturing step S101 is carried out on a regular basis to ensure high quality, in particular in terms of timeliness, estimation of variance, etc. of the data D collected by the processing unit 8. Therefore, it may be advantageous, if the capturing step S101 can be specifically triggered to monitor the automation system 2 and/or the at least one component 3, 4, 5, 6, 7 of the automation system 2.

The data D captured and collected during the capturing step S101 by the processing unit 9 can originate from any component 3, 4, 5, 6, 7, in particular from any physical sensor unit 5 of the automation system 2 and/or from virtual sensors within the automation system 2. The data provided by the physical and/or virtual sensor units 5 may be, for example, current values, voltage values, temperature values, position values, etc. Furthermore, the data D may comprise data, which describes a state or condition of the automation system 2 and/or a particular component 3, 4, 5, 6, 7 of the automation system 2, like e.g., input- and/or output behavior of actuators, control status, control errors, motion profiles of shuttles 4, state of the automation system 2 and/or at least one component 3, 4, 5, 6, 7 in event of failure, etc. The data D can be collected as time series with high frequency and/or as aggregated or processed data values. The data D to be captured may also comprise data, which are derived from measured data values.

Additionally, the captured data D may contain an assignment to a physical unit or the component 3, 4, 5, 6, 7, which the data D originates from and/or which the data D describes (e.g., behavior, condition or status). So, a clear connection between the captured data D and the respective components 3, 4, 5, 6, 7 of the automation system 2 is established during the capturing step S101. Alternatively, the assignment between the captured data D and the respective components 3, 4, 5, 6, 7 can also be established during one of the following steps of the method, in particular during a preprocessing step S102 or during a storage step S103. It is also possible, that the assignment is even established during an evaluation step S104. Often it is not reasonable to store and/or evaluate the captured data D in its raw format. So, the captured data D can be preprocessed by the processing unit 8 in the preprocessing step S102, to reduce necessary storage space and bandwidth and to avoid repeated - often resources consuming - processing. In particular, the amount or the dimension of the captured data D is reduced during the preprocessing step S102. I.e., that only certain representative values (e.g., statistical moments, effective values, etc.) have to be stored for the evaluation step S104 instead of high frequency time series of certain data values, which were captured during the capturing step S101.

However, it is also possible, to create assignments between different captured data during the preprocessing step S102 on the processing unit S102. For example, data D, captured as high frequency raw data (e.g. time series of a motor quadrature current) during the capturing step S101, can be linked with meta information for identification or classification (e.g., target speed or load case) during the preprocessing step S102. The meta information linked to the captured data D helps to further process the captured data D in a targeted manner. In particular, when an edge device 8 is used as processing unit 8, the meta information may even be obtained from a system-external communication network (e.g. third-party API) and combined with the captured data D.

The preprocessing of the captured data D or the preprocessing step S102 can either be carried out continuously or at regular time intervals, mainly independent of the data capturing. If the preprocessing step S102 is carried out continuously, the preprocessing of captured data is done as soon as the data D are recorded by the processing unit 8 during the capturing step S101. This ensures a chronological processing of the data D and, ideally, results in the preprocessed data promptly being available for storage and/or evaluation.

Since there may be some dependencies between captured data or an immediate and continuous preprocessing of the captured data (e.g., of individual data series) may lead to a loss of efficiency, it may be possible to store the captured data D in a temporary memory unit, which may be on the processing unit 8 or which may be a separate table or storage area in the storage unit 9. The temporary memory unit can then be checked for unprocessed data at regular intervals (e.g., after or during the capturing step S101) to trigger the preprocessing step S102 and to preprocess data newly stored in the temporary memory unit, if necessary. This allows, for example, to parallelize the capturing step S101 and the preprocessing step S102 on the processing unit 8 and to carry out the preprocessing step S102 more efficiently.

After capturing the data D in the capturing step S101 and after preprocessing the captured data D in the preprocessing step S102, if necessary, in the processing unit 8, the data D is stored appropriately in the storage unit 9 in the storage step S103 to be available for the evaluation step S104 at any time. During the storage step S103 the data D is transferred from the processing unit 8 to the storage unit 9 to be stored, in particular in a structured form. In the view of the large amount of data D of the automation system 2, which is captured for the monitoring and often stored for a long time to have historical data for analysis, the captured and preprocessed data D is ideally stored in a database 9 - either locally connected to the processing unit 8 and/or being cloud-based storage unit 9, whereby a relational database 9 is chosen due to the previously known and rigid structure, for example.

In general, the data D captured during the capturing step S101 by the processing unit 8, often in a weak structured form, can be structured during the preprocessing step S102 and/or during the storage step S103 and thus prepared for the following data analysis in the evaluation step S104. Even if it is possible to evaluate the captured data D immediately after the capturing step S101 in the evaluation step S104, the preprocessing step S102 and/or the storage step S103 have the advantage that the data D could be better structured and prepared for analysis. Furthermore, the data storage step S103 enables historical data of the automation system 2 to be accessed by the evaluation unit 9 for the analysis.

In the evaluation step S104, the data D is analyzed using Artificial Intelligence methods or short AI methods by the evaluation unit 10. It is possible to analyze and evaluate the data D continuously, whenever new data D arrives - either on the processing unit 8 or in the storage unit 9. Alternatively, it is also possible to analyze the data D in regular time interval automatically. I.e., when the evaluation step S104 is triggered, the evaluation unit 10 retrieves the data D stored in the storage unit 9, which are required for the analysis depending on the application or embodiment of the method for monitoring the automation system 2. Individual exemplary applications or embodiments of the method are described in more detail in the course of the description.

The evaluation unit 10 uses AI method to analyze the data D. Such AI methods may be Artificial Neural networks, decision trees, so-called random forests, support-vector machines, Gaussian process, etc., which usually are based on models designed during the design phase of the automation system 2 and trained e.g. during a test phase or test operation of the automation system 2. By using these AI methods, patterns, correlations, interactions between components 3, 4, 5, 6, 7 and/or behaviors of the automation system 2 or of at least one component 3, 4, 5, 6, 7 may be recognized in the captured data D and/or the data D may be classified during analysis and evaluation. By recognizing these patterns, correlations, interactions and/or behaviors and/or by classifying the data D, a current condition of the automation system 2 and/or at least one component 3, 4, 5, 6, 7 may be determined by the evaluation unit 10.

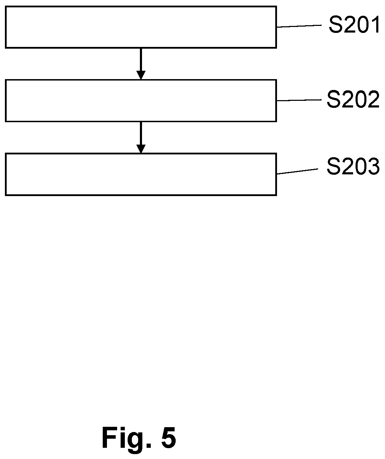

Additionally, a deviation of the determined condition from the expected condition of the automation system 2 and/or at least one component 3, 4, 5, 6, 7 may be determined. The expected condition used as reference for determining the deviation, may, for example, be determined during a test phase or test operation and/or during commissioning of the automation system 2 using AI methods, as well - and is shown with the help of Figure 5 in the course of the description.

It is also possible to estimate or predict future trends in the condition and/or behavior of the automation system 2 and/or the at least one component 3, 4, 5, 6, 7 based on temporal tendency recognized in the captured data D with the help of the AI methods.

Furthermore, possible actions and/or courses of action can be derived from the analysis results in evaluation step S104. These actions may range from e.g. issuing an error message, indicating a malfunctioning component 3, 4, 5, 6, 7; and/or issuing instructions up to a power reduction or even a stop of the automation system 2. Possible actions and/or courses of action may always depend on the individual application or embodiment of the method and will be described exemplary in the course of the description. In order to derive the appropriate action and/or courses of action from the analysis result (e.g. deviation between determined condition and expected condition), an evaluation criterion can be used, which can also be determined during the test operation and/or commissioning of the automation system 2, for example.

After analyzing and evaluating the data D using AI methods in the evaluation step S104, the analysis results may be output and displayed on the display unit 11 in an output step S105. During the output step S105 the results of the analysis can be visualized. Furthermore, the actions derived from the determined condition and/or deviation from an expected condition can be output and/or indicated on the display unit 11. For example, error messages, indications of malfunctioning components 3, 4, 5, 6, 7, signals or indications for power reduction or a stop of the automation system 2 can be displayed on the display unit 11. The display unit 11 may be e.g., a local display unit 11 directly connected or integrated into the processing unit 8. The results of the analysis may also be provided in the form of a cloud-based application or service, which could be retrieved via the Internet and displayed using a user interface in a web browser, for example.

Figure 5 shows with the help of an exemplary flowchart, how the expected condition of the automation system 2 and/or the at least one component 3, 4, 5, 6, 7 used as a reference for the method for monitoring of the automation system 2, in particular in the evaluation step S104, is determined. The expected condition is often determined during a test phase or test operation of the automation system 2. It is also possible to determine the expected condition during tests carried out during commissioning of the automation system 2. The expected condition depends on the respective monitored component 3, 4, 5, 6, 7 of the automation system 2, as exemplary applications and/or embodiments of the method for monitoring of the automation system 2 will show.

During a capturing step S201, which corresponds to the capturing step S101 of the monitoring method, predefined data D of the automation system 2 (e.g., current values, position values, voltage values, temperature values) are captured. The captured data D should have a physical reference to the component 3, 4, 5, 6, 7 under investigation and/or its functionalities. The predefined data D are captured for a defined time span during the capturing step S201.

During a learning step S202 these captured predefined data D are used to train the AI method (e.g., Artificial neural network, decision trees, so-called random forests, support-vector machine, etc.), which is used during the evaluation step S103 of the method for monitoring the automation system 2. Alternatively, predefined or known training data can be provided for the learning step S202 instead of capturing predefined data D during the capturing step S201.

During the learning step S202 the AI method, implemented in the evaluation unit 10, is trained with the captured predefined data D of the capturing step S201 or with provided training data. I.e. that e.g., a mathematical model and/or statical algorithm, which depends on the AI method used and which was defined during a design phase of the automation system 2, for example, is trained and learns from the captured data D and generalizes to unseen data. Thus, the trained AI method can then recognize patterns, correlations, data classifications, interactions of components 3, 4, 5, 6, 7, and system behavior, etc. from the data D captured in the capturing step S101 of the method for monitoring the automation system 2.

Furthermore, the expected condition of the automation system 2 and/or of the at least one component 3, 4, 5, 6, 7 under investigation or to be monitored can be generated with the trained AI method in a determination step S203. The expected condition may be a multi-valued, i.e., the expected condition may include several expected values, which describe the expected condition of the automation system 2 and/or the at least one component 3, 4, 5, 6, 7 to be monitored.

Additionally, the evaluation criterion can be defined, which can be used to evaluate a deviation between the expected condition and the determined condition in the evaluation step S104 of the method for monitoring the automation system 2. Possible evaluation criterions for evaluating the deviation may be tolerances, threshold values, limit values, etc. for the expected values included in the expected condition, which should not be exceeded by the deviation determined during the evaluation step S104. The expected condition and the evaluation criterion, determined during the determination step S203, may be stored on the evaluation unit 10 to be used during the evaluation step S104 of the method of monitoring the automation system 2.

The method and the system 1 for monitoring an automation system 2 can be used for various uses cases, examples of specific embodiments of the method and system 1 are given below.

In a specific embodiment, the method and the system 1 for monitoring an automation system 2 can be used to detect a failure or a malfunction of an electrical and/or electronical component of an automation system 2 - e.g. an electromagnetic transport system 21, robot system 22, 23, etc. - during commissioning and/or during normal operation.

Automation systems 2, 21, 22, 23 comprise a plurality of sensor units 5, actuators and connections, which link these components e.g., for exchanging data like signals and commands. The method according to the invention can be used to check the operational capability of the individual electrical and/or electronical components, in particular sensor units 5, during commissioning and/or normal operation of the automation system 2, by continuously and/or at regular time intervals analyze and evaluate the sensor data, the signals received and/or sent via the communication network connections and to check the input and/or output behavior of the actuators, for example. Thus, it is possible to detect possible problems in the automation system 2 or in parts of the automation system 2 (e.g., like segments of an electromagnetic transport system 21) at an early stage and to compensate for detected weak points as a predeterminable action based on the data analysis and evaluation using AI methods. In particular electrical and/or electronical components like e.g., position sensor units 5 of an electromagnetic transport system 21, motor phases, DC links including a balancer, temperature sensor units and derived protection models and/or communication connections within the automation system 2 can be monitored and checked to recognize a failure, malfunction and/or restricted function of the particular component.

Before the automation system 2 or the respective electrical and/or electronical component, e.g. a position sensor unit 5, can be monitored, an expected condition of the respective component 5 has to be determined according to the steps shown exemplary in Figure 5. During the capturing step S201 predefined data D, which are related to the respective component 5 - e.g. which are related to the position of the position sensor unit S201 to be checked, are captured and collected in the processing unit 8 during test operation or a test phase. The data D captured and collected may comprise all currents (preferably currents with reference to a propulsive force-forming component), position values, temperature values and voltages. Then a selected AI method, for example, an Artificial Neuronal Network is to be trained on the basis of the captured and collected data D in the learning step S202 during a predefined learning period. In this way, a multi-value expected condition comprising several expected values can be derived in the determination step S203. Additionally, a multi-value evaluation criterion (e.g. holding criterion for each expected value) can be defined in the determination step S203 as well. During commissioning and/or a defined monitoring period during normal operation of the automation system 2, data D with a physical reference to the electrical and/or electronical component, e.g. a position sensor unit 5, to be monitored is captured and collected in the capturing step S101 by the processing unit 8 of the system 1. After eventually preprocessing the captured and collected data D in the preprocessing unit 8 in the preprocessing step S102 and storing the data D in the storage unit 9 in the storage step S103, the data D is evaluated by the evaluation unit 10 in the evaluation step S104 using the trained Artificial Neuronal network as AI method. If a deviation of the current condition of the monitored component 5 from the expected condition, determined in the determination step S203, occurs abruptly or continuously, this deviation will be determined in the evaluation step S104 of the method for monitoring the automation system 2. Additionally, the evaluation criterion can be evaluated in the evaluation step S104 to derive an appropriate action for handling the determined deviation. Such an appropriate action may be issuing an error message, issuing an indication to replace the temporally deteriorating or faulty component 5 and/or continuing the operation of the automation system 2 with reduced performance, if possible. If a spatial assignment is possible based on the captured data D and/or on evaluation of the data D using the trained Artificial Neuronal Network, the malfunctioning or faulty component 5 may be identified and an indication for this component 5 can be output and displayed in the output step S105 on the display unit 11. For example, a visualization of the automation system 2 can be displayed, wherein the malfunctioning or faulty component 5 is marked, for example. Additionally, the appropriate action derived from the determined deviation - e.g. error message, indication to replace the component 5 (e.g., sensor unit, group of sensor units) and/or instructions for courses of action - can be output and displayed on the display unit 11 in the output step S105.

In another specific embodiment, the method and the system 1 for monitoring an automation system 2 can be used to check an adjustment and correct installation of mechanical components 3 of the automation system 2. In particular, the adjustment of single stator segments, the alignment of the stator segments 3 and/or transitions of stator segments 3, the transitions in the area of switches, dual tracks, etc. and the alignment guide rails, etc. can be checked in an electromagnetic transport system 21 during commissioning of the transport system.

Usually, the stator 3 of an electromagnetic transport system 21 is manufactured in parts and assembled to form a continuous stator, which forms the transport path of a transport system 21 in the form of a LLM or the transport plane of a transport system 21 in the form of the PM. For example, the transport system 21 can be assembled and tested during a test phase or test operation, for example, to derive nominal courses of e.g., currents, control errors, etc. at transitions of stator segments 3 or guide rails, nominal values of currents, positions of shuttles 4 and/or normal forces, exercised by the shuttles 4 on the surface of the stator during operation, at positions in the area of transitions of stator segments 3, in the area of switches, dual tracks, etc., used as expected condition. Furthermore, nominal courses of the normal forces exercised by the shuttles 4 during operation on the surface of single stator segments 3, can be determined as expected condition. The determination of the respective nominal values and/or nominal course may be done in the capturing step S201, wherein the nominal values (e.g., currents, positions, etc.) may derive from measurements and the nominal course (e.g., normal force) may be determined using models, which were created during a design phase, for example.

Furthermore, an AI method, which can be used to analyze and evaluate the data capture during commissioning of the transport system 21, can be trained e.g., to recognize patterns like courses of currents, courses of the normal force of shuttles moving along a stator segment 3, etc. in captured data D in the learning step S202. Then, in the determination step S203 evaluation criteria may be defined to be able to assess the adjustment and alignment of the mechanical components 3, in particular stator segments 3, guide rails and switches.

After the test phase or test operation the transport system 21 is usually disassembled and e.g. reassembled at the customer's site. To assess the setting and adjustment of the individual stator segments 3 of the transport system (e.g. in form of a LLM or PM), the normal forces exercised by shuttles 4 moving along or on the respective individual stator segment 3 are determined at different positions, wherein the normal forces can be measured or estimated from measured data D (e.g., currents at defined positions, positions of shuttles 4, etc.) during the capturing step S101. The course of the normal forces over the individual stator segment 3 allows the installation position to be assessed in the evaluation step S104, whereby the mean value of all shuttles 4 is compared with an expected condition, e.g. a nominal normal force at predefined positions on the individual stator segment 3. Deviations from the nominal normal force as expected condition are determined and the determined deviations are evaluated in accordance with the defined evaluation criteria e.g. using AI methods, to detect installation errors and to derive recommendations for actions. The condition of the installation of the individual stator segment 3 and the derived recommendations for action may be output and displayed in the output step S105. Depending on the determined deviation of the individual stator segment 3 the following conditions may be distinguished:
- flawless: the normal forces determined at all predefined positions of the individual stator segment 3 meet the defined evaluation criteria - e.g., lie on average with a predefined tolerance range around the nominal normal force. The tolerance range may be, for example an acceptable deviation of 5% from the nominal normal force;
- offset: the normal forces at all positions analyzed and evaluated have similar values, but deviate from the expected nominal normal force in the same way; as a predeterminable action an air gap between the shuttles 4 and the individual stator segment 3 has to be adjusted accordingly, since the air gap may be too small or too large;
- misalignment: the determined deviations of normal forces from the nominal normal forces or the determined deviation of the course of the normal forces from the nominal course shows either an increasing or decreasing curve; the respective stator segment 3 may not be properly mounted, as predeterminable action, it may be recommended to adjust the respective stator segment 3, for example, by rotating the stator segment 3 around its center depending on the determined deviations;
- torsion: the determined deviation may show an arc-like curve, caused by an arc-like torsion of the stator segment 3, which can be have varying degrees depending on the mounting (e.g. over tightening of mounting screws); as predeterminable action, it may be recommended to e.g. loose the mounting of the respective stator segment 3, check it for damages and then re-adjust and/or re-align and mount the stator segment 3 a new.

While checking the adjustment of the single individual stator segments 3 usually more complex curves of deviations of normal forces from the nominal normal forces are determined during the evaluation step S104, but these more complex curves can be represented as a combination of the possible conditions listed above. For example, quite often a superimposed offset occurs in combination with misalignment and/or torsion.

Additionally, the alignment of the stator segments 3 - in particular in the area of transitions between stator segments 3 - of the transport system 21 in the form of a LLM or PM can be checked. The course of the normal force along the predefined transport path along the stator or a deviation from a nominal course is considered and assessed to determine, whether the course of the normal force along the predefined transport path does not exhibit any jumps.

For this purpose, the normal forces at (or close to) the meeting ends of at least two stator segments 3 are compared and a deviation between the normal forces at (or close to) the meeting ends of the stator segments 3 is determined in the evaluation step S104. In the case of a well-adjusted transport system 21, the normal force at the meeting ends of both stator segments 3 should be as equal as possible, i.e., that the determined deviation should be almost zero - as an expected condition. In the evaluation step S104, the determined deviation can be assessed using a predefined evaluation criterion. For example, if jumps in the course of the normal force occur, which are greater than a predefined percentage, for example greater than 5%, or the determined deviation is greater than that predefined percentage, the jump or deviation can be classified as requiring correction. For example, the relevant stator segments 3 can be displayed in output step S105 as a predeterminable action. The relevant stator segments 3 may then be re-aligned to meet the evaluation criterion.

Furthermore, the system 1 and the method for monitoring an automation system 2 can be used to check the alignment of guide rails and/or switches and/or dual tracks of transport system 21 in the form of LLMs, wherein switches and/or dual tracks combined at least two stator segments 3 running at least partially in parallel.

Data D specific for stator segments 3 such as e.g., current values or control errors in the transition area for one or more shuttles 4 are captured in the capturing step S101 for evaluation of the alignment of the guide rails. The captured data D is then compared to a nominal course or curve of the captured values, which was determined e.g., during a test phase, as expected value in the evaluation step S104. Furthermore, the frequency components of the course may also be analyzed in the evaluation step S104. AI methods may be used for the analysis and evaluation of the captured values. If the captured data D (on average) deviate too much from the nominal course or expected condition (e.g., a limit value for the deviation may be defined in the determination step S203 during the test phase as evaluation criterion to be met) or if undesirable frequency components are determined to a greater extent, the guide rails - in particular at the area of transitions - are considered to be unadjusted. The affected guide rails can, for example, be displayed as a predeterminable action in output step S105.

For an evaluation of switches and/or dual tracks, data D of the drive, like e.g., current values, position values of shuttles 4 and/or normal forces exercised by shuttles 4 in the area of the switch and/or dual track can be used and captured in the capturing step S101. In the evaluation step S104 the captured measured values from the different stator segments 3, in particular at specific points and in the area of switches and/or dual tracks, are compared on the one hand. On the other hand, courses of captured values (e.g., current values, position values, etc.) are compared to nominal courses as expected conditions determined in the determination step S203 from models defined in a design phase of the transport system 21, for example. The results of these comparisons (e.g. differences in the actual positions on several stator segments 3, assessment of friction, etc.) are analyzed and evaluated to assess the alignment and to discover inadequate alignment.

In a third specific embodiment, the method and the system 1 for monitoring an automation system 2 is used for wear monitoring (i.e., detection and prediction) of components of the automation system 2. Such components are, for example, the guiding elements (e.g., rollers) on a shuttle 4 of a transport system 21 in the form of an LLM, which are abraded during operation, causing an air gap between the surface of the stator 3 and the shuttle 4 to change. The behavior of the individual shuttles 4 may vary due to the individual wear of the guiding elements of the individual shuttles 4 depending on e.g., mechanical and/or electromagnetic tolerances of the individual shuttles 4, number of usages, traveled distance, etc. A key aspect of wear monitoring is the initial, "absolute" assignment of the measurement data to wear values. Different approaches can be used for this assignment, which can be done during determination of an expected condition, wherein the expected condition of the guiding elements may be an initial state of the guiding elements of the individual shuttle 4. In a first approach, the initial state of the guiding elements can be entered manually, e.g., via an appropriate user interface and added to the storage unit 9, e.g., as an offset linked to the respective shuttle 4. In a second approach, there is the possibility to recognize the initial state of the guiding elements of a shuttle 4 automatically, e.g. by the fact that a sudden decrease in wear is only possible by replacing the guiding elements. In a third approach, the initial state of the guiding elements of the shuttle 4 results from the first commissioning of the transport system 21. In case no assignment of an initial state is made or can be made, a relative statement may be still possible. However, an absolute statement and thus a comparison with wear limits is not possible.

During wear monitoring, the stator 3 and the respective shuttles 4, which are the rotor of the LLM, have to be considered, wherein the influence of the stator 3 has to be reduced. In particular the air gap is considered during wear monitoring using the system 1 and method for monitoring an automation system 2. Therefore, it is necessary to considered whether the stator 3 provides air gap adjustment or not. In case the air gap is not adjustable at the stator 3, only a few stator segments 3 can be considered for wear monitoring. In case the stator 3 provides air gap adjustment, it has to be checked whether the air gap is adjusted correctly or that a predefined air gap of other stator segments 3 can be used as reference.

In the capturing step S101 raw data D (e.g., position, currents, voltage, normal force, etc.) for the respective shuttle 4 is captured by the processing unit 8. In the preprocessing step S102 time series of the captured raw data D are generated shuttle-specifically using statistical methods, like e.g., elimination of outliers, averaging over suitable time intervals and stator segments, etc., by the processing unit 8. Furthermore, system knowledge (e.g., for temperature compensation) may also be used by the processing unit 8 to generate the time series. The generated shuttle-specific time series may be stored in the storage unit 9 in the storage step S103. In the evaluation step S104 a relative change is determined from the generated shuttle-specific time series by the evaluation unit 10 using, for example, decision trees or random forests or Gaussian processes as AI method and assuming that a defined initial state is given at the start time. This defined initial state could have been assigned as described above. In the evaluation step S104, for example, a linear trend can be fitted for the generated shuttle-specific time series of measured values e.g., over time or over the distance traveled by the respective shuttle 4. Then the determined relative change in the measured values must be linked to the air gap and/or the wear of the guiding elements of the respective shuttle 4. If, for example, measured or estimated values of the normal force are used, the relative change of wear may result from the difference of e.g., an initial value of the normal force and the respective value of the normal force at a certain time or distance that results from the changed magnetic flux density. This difference can be approximately converted into a change in the air gap using the physical parameters and give an estimation of the wear of the guiding elements of a respective shuttle 4, which may be output and displayed in the output step S105.

The wear monitoring using the system 1 and method for monitoring an automation system 2 may also be used for e.g., wear prediction and/or predictive maintenance. By using decision trees or random forests or Gaussian processes, for example, in the evaluation step S104, the development of the wear of the guiding elements of a respective shuttle 4 may also be predicted quite precisely. So, for example, spare-parts can be ordered just-in time and/or possible maintenance date could be indicated and scheduled as a predeterminable action based on the determined condition of the guiding elements of the respective shuttle 4 and the determined linear trend derived from the evaluation of the captured data D using an AI method like decision trees or random forests or Gaussian processes.

Furthermore, the method and the system 1 for monitoring an automation system 2 can be used for diagnostics and recognition of abnormal behavior.

In an event of failure or if an error occurs in the automation system 2, the condition of the automation system 2 at the time of failure and/or error or immediately before is captured by the processing unit 8 in the capturing step S101 and then stored in the storage unit 9, e.g. in a cloud-based storage 9 in the storage step S102. In particular, data D such as command and error logs, values measured a few seconds before the failure and/or error and other diagnostic values of the automation system 2 may be captured, collected and stored. The stored data D can then be analyzed and evaluated in the evaluation step S104 using AI methods at any time later - e.g., in regular or predefined time intervals. The analysis may help to find the cause of the failure and/or error. Furthermore, visualization may be used to support the analysis - e.g., the analysis results or the time sequence within the automation system 2 (e.g., movements of moving parts of the automation system 2, component states, etc.) may be visualized and displayed in the output step S105 on the display unit 11 to help to discover the cause of the failure and/or error. Furthermore, the analysis and evaluation of captured and collected data D provides the user or manufacturer of the automation system 2 with valuable information regarding the reliability, robustness and possible weak points of the automation system 2 and its components 3, 4, 5, 6, 7 - hardware, software or application software. Additionally, the storage of condition of the automation system 2 at the time of failure and/or error in the storage unit 9 can also be useful, in case an error has almost occurred. For example, if the automation system 2 is almost at its load limit or has already issued a warning (e.g., concerning cycle time, following error, overtemperature, etc.).

Furthermore, the data D captured in the capturing step S101 and stored in the storing step S102 may also be used to detect abnormal behavior of the automation system 2, when data D captured over a longer period of time is analyzed and evaluated in the evaluation step S104. Irrespective of the specific data observed, a change in the behavior or unexpected behavior can be detected at an early stage and preventive measures as predeterminable actions can be taken accordingly. The deviation in behavior can result from deviations in individual measured values or as a deviation in any combination of several measured values.

Another preferred embodiment of the system 1 and method for monitoring an automation system 2 is used to optimized and/or adapt the automation system 2 to prevent inefficient operation and/or increase power consumption, to increase efficiency of the automation system, to prevent possible damages of components 3, 4, 5, 6, 7 and/or overload and/or malfunction, to prevent increased wear of components 3, 4, etc.

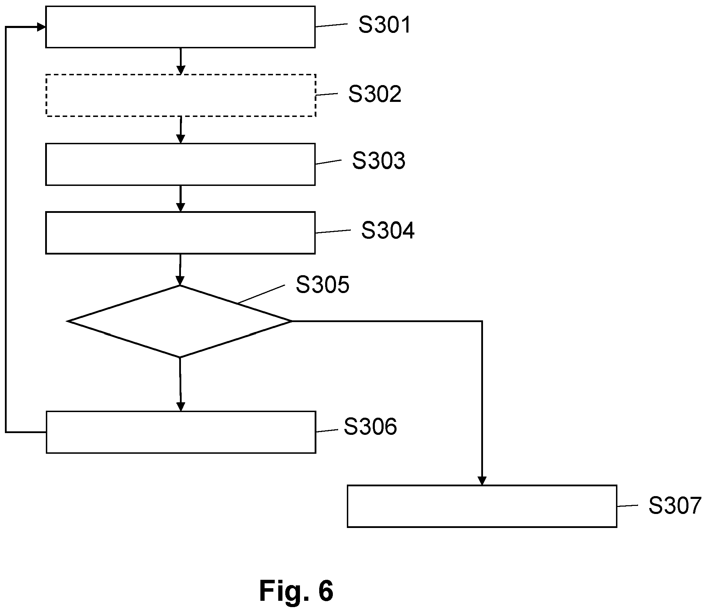

Figure 6 exemplary shows a flowchart for adapting the automation system 2 or at least one component 3, 4, 5, 6, 7 of the automation system 2. In particular, configuration parameters of a controller 6 and/or an observer unit and/or a compensation unit and/or a compensation function provided by a controller 6 or the control unit 7 can be adapted to optimize the behavior of the automation system 2. The adaption may be used as a particular predefined action, when a deviation between the expected condition of the automation system 2 and/or of at least one component 3, 4, 5, 6, 7 of the automation system 2 and the determined condition of the automation system 2 and/or of at least one component 3, 4, 5, 6, 7 of the automation system 2 was recognized during the evaluation step S104 when monitoring the automation system 2. For example, if a high-frequency vibration is recognized in a current signal during time series analysis of current values or signals, contouring errors, rotational speed error of a motor or drive, etc. in the evaluation step S104, the controller 6 of the drive may be parameterized incorrectly, or the behavior of the drive may have change over time. The high-frequency vibration leading to an increased power consumption and an inefficient operation of the automation system 2. Furthermore, the automation system 2, in particular a compensation function provided, can be adapted, if the compensation is no longer effective, due to a changed global variable (e.g. temperature). For example, during monitoring a transport system 21, it is detected that transitions between stator segments 3 are inefficient or that switch release is not working properly - as described above, then the compensation of the transition of the stator segments 3 or the switch release may be adapted as a predeterminable action.

For adapting and optimizing an automation system, the method for monitoring the automation 2 can be extended including additional steps S305, S306, S307.

The adaption process starts with the capturing step S301, which corresponds to the capturing step S101 of Figure 1. During the capturing step S301 the data D of the automation system is captured and collected by the processing unit 9. Depending on the monitored component 3, 4, 5, 6, 7 and/or parts and/or functions of the automation system 2, the captured data D may comprise current values, position values, configuration data of the automation systems 2 and/or components 3, 4, 5, 6, 7, temperature values, local throughput or movement profiles of shuttles 4, etc. The captured data D may be preprocessed by the processing unit 3 in the preprocessing step S302, if necessary, and stored in a storage unit 9 in the storage step S303 - each corresponding to the preprocessing step S102 and the storage step S103 of Figure 1.

In the evaluation step S304 corresponding to the evaluation step S104 of Figure 1 - when monitoring the automation system 2, the captured data D are analyzed and evaluated using an AI method, which was trained during determining the expected condition of the automation system 2 and/or the at least one component 3, 4, 5, 6, 7 in the learning step S202 (shown exemplary in Figure 5). During the evaluation step S304 a current condition of the automation system 2 and/or the at least one component 3, 4, 5, 6, 7 is determined by analyzing and evaluating the captured data D using the trained AI method. Depending on the monitored component 3, 4, 5, 6, 7 and/or parts and/or functions of the automation system 2, the AI method used and trained may be an Artificial Neuronal Network, decision trees, so-called random forests, support-vector machines, etc.

Then, the determined condition of the automation system 2 and/or the at least one component 3, 4, 5, 6, 7 is compared to the expected condition by the evaluation unit 10 in a comparison step S305. The expected condition used was determined in the determination step S203 during the training of the AI method used by the evaluation unit 10. During the comparison step S305, first the determined condition of the automation system 2 and/or of the at least one component 3, 4, 5, 6, 7 is compared to the expected condition. Then it is checked, whether an evaluation criterion is met, which was defined in the determination step S203 during the training of the AI method used by the evaluation unit 10.

It is possible, for example, to use the deviation of the determined condition of the automation system 2 and/or the at least one component 3, 4, 5, 6, 7 from the expected condition and check, whether the predefined evaluation criterion is met or not - e.g. whether predefined tolerances, threshold values, etc. are met by the determined deviation. Since the expected condition and the determined condition of the automation system 2 and/or the at least one component 3, 4, 5, 6, 7 may be multi-value, the deviation may also be multi-valued. So, for example, each value of the deviation has to be checked for meeting the predefined evaluation criterion.

If the deviation fails to meet the predefined evaluation criterion - e.g., at least one of the values of the deviation exceeds a predefined threshold of the evaluation criterion or is not within the predefined tolerances, then at least one configuration parameter of automation system 2, in particular a configuration parameter linked to the at least one value of the deviation failing to meet the evaluation criterion, is varied in a variation step S306. For example, the at least one configuration parameter to be varied may be at least one parameter of a compensation function provided by a controller 6 or of a compensation unit, at least one controller parameter of a controller 6, at least one switch release parameter, parameters influencing movement profiles of shuttles, etc. The at least one configuration parameter is adapted in accordance with a predefined adaption rule (e.g., stochastic parameterization of the configuration parameter with at least one transition, deterministic laws, etc.).

After having varied the at least one configuration parameter of the automation system 2 and/or of the at least one component 3, 4, 5, 6, 7 the data D provided by the now adapted automation system 2 and/or the at least one component 3, 4, 5, 6, 7 is captured in the capturing step S301 again. Optionally, the preprocessing step S302 and the storage step S303 are also repeated. Then, the captured data D of the adapted automation system 2 and/or the at least one component 3, 4, 5, 6, 7 is evaluated by the evaluation unit 10 in the evaluation step S304 and the comparison step S305. In the evaluation step S304, the data provided and/or generated by the adapted automation system 2 and/or the at least one component 3, 4, 5, 6, 7 is analyzed and evaluated using the trained Al method to determine the condition of the adapted automation system 2 and/or the at least one component 3, 4, 5, 6, 7 of the adapted automation system. The determined condition of the adapted automation system 2 and/or the at least one component 3, 4, 5, 6, 7 is then again compared to the expected condition by the evaluation unit 10 in the comparison step S305. A possible deviation of the determined condition of the adapted automation system 2 and/or the at least one component 3, 4, 5, 6, 7 from the predefined expected condition is determined by the evaluation unit 10.

Then, it is checked again in the comparison step S305, whether the determined deviation of the adapted automation system 2 and/or the at least one component 3, 4, 5, 6, 7 now meets the predefined evaluation criterion. I.e., it is checked in the comparison step S305, whether the determined condition still deviates too much from the expected condition (e.g. exceeds predefined threshold limits, predefined tolerances, etc,9.) or whether the deviation has been reduced by the variation of the at least one configuration parameter in such a way that the evaluation criterion is met.

If the evaluation criterion is not met by the adapted automation system 2 and/or the at least one component 3, 4, 5, 6, 7, the at least one configuration parameter of the automation system 2 is varied in accordance with the predefined adaptation rule once again in a repeated variation step S306. Then the capturing step S301, the optional preprocessing step S302, the optional storage step S303, the evaluation step S304 and the comparison step S305 are performed again. I.e. the adaption of the automation system 2 is performed, until in the comparison step S305 no deviation between the determined condition of the adapted automation system 2 and the expected condition is determined or a reduced deviation that fulfills the defined evaluation criterion is determined. Then the adaption of automation system 2 and/or of the at least one component 3, 4, 5, 6, 7 of the automation system 2 is terminated in a termination step S307. The variation of the at least one configuration parameter of the automation system 2, thus, may ideally led to an improvement and/or optimization of the automation system 2 and its operation - in particular with respect to wear, power consumption and efficiency.

Furthermore, it is possible to link the data D captured, collected and stored in the capturing step S101, S301 and in the storage step S103, S303 with quality characteristics of products and/or objects manufactured and/or handled by the automation system 2. Thus, it is possible in certain cases to determine the quality of the product during production by capturing data D in the capturing step S101, S301 such as e.g. tracking errors, power consumption, temperature values, etc. These data D have to be pre-processed accordingly in the pre-processing step S102, S202 and/or collected in form of traces, for example, and they are ideally analyzed and evaluated centrally in the evaluation step S104, S304 by a cloud-based evaluation unit 10.

## Claims

1. A method for monitoring an automation system (2) comprising a plurality of components (3, 4, 5, 6, 7), which are connected by a communication network and which interact and exchange data to provide and perform predefined tasks automatically during manufacturing and/or production processes, ***characterized in that the*** method at least comprises the following steps:
- capturing data (D) (S101), which are provided and generated by the automation system (2) and/or the components (3, 4, 5, 6, 7) of the automation system (2) while performing the predefined tasks during operation;
- evaluating and analyzing the captured data (D) using Artificial Intelligence methods (S104), to determine a condition of the automation system (2) and/or at least one component (3, 4, 5, 6, 7) of the automation system (2) and/or to determine a deviation of the determined condition of the automation system (2) and/or the at least one component (3, 4, 5, 6, 7) from an expected condition the automation system (2) and/or of at least one component (3, 4, 5, 6, 7); and
- deriving and setting predeterminable actions for the automation system (2) and/or the at least one component (3, 4, 5, 6, 7) of the automation system (2) (S104), depending on the determined condition and/or the determined deviation.

2. The method according to claim 1, ***characterized in that*** the captured data (D) is preprocessed (S102).

3. The method according to claim 1 or claim 2, ***characterized in that*** the captured and/or preprocessed data (D) is stored before being analyzed and evaluated using Artificial Intelligence methods (S103).

4. The method according to any of claims 1 to 3, ***characterized in that*** the data (D) generated and provided by the automation system (2) and/or the components (3, 4, 5, 6, 7) of the automation system (2) while performing the predefined tasks during operation is captured at regular time intervals and/or at predefined time intervals and/or at random time intervals (S101).

5. The method according to any of claims 1 to 4, ***characterized in that*** the captured data (D) is analyzed and evaluated using Artificial Intelligence methods continuously and/or at regular time intervals (S104).

6. The method according to any of claims 1 to 5, ***characterized in that*** the determined condition of the automation system (2) and/or the at least one component (3, 4, 5, 6, 7) of the automation system (2) and/or the determined deviation of the determined condition from the expected condition is output and displayed (S105).

7. The method according to any of claims 1 to 6, ***characterized in that*** the expected condition of the automation system (2) and/or the at least one component (3, 4, 5, 6, 7) of the automation system (2) is determined (S203) by at least capturing predefined data during a test operation of the automation system (2) (S201) and by analyzing and evaluating the captured predefined data (D) during the test operation using Artificial Intelligence methods (S202).

8. The method according to claim 7, ***characterized in that*** an evaluation criterion is defined during the test operation (S203) for evaluating the deviation between the determined condition of the automation system (2) and/or the at least one component (3, 4, 5, 6, 7) of the automation system (2) and the expected condition.

9. The method according to any of claims 1 to 8, ***characterized in that*** the determined deviation between the determined condition of the automation system (2) and/or the at least one component (3, 4, 5, 6, 7) of the automation system (2) and the expected condition is minimized as predeterminable action, by varying at least one configuration parameter of the automation system (2), in particular of a controller (6) and/or an observer unit and/or a compensation unit of the automation system (2) (S306).

10. The method according to claim 9, ***characterized in that*** the at least one parameter of the automation system (2), in particular of a controller (6) and/or an observer unit and/or a compensation unit, of the automation system (2), is varied in accordance with a predefined adaption rule (S306).

11. The method according to any of claims 1 to 10, ***characterized in that*** an Artificial Neuronal Network, decision trees, support-vector machines, Gaussian processes and/or so-called random forests are used as Artificial Intelligence methods (S104, S202, S304).

12. A system (1) for monitoring an automation system (2, 21, 22, 23), comprising a plurality of components (3, 4, 5, 6, 7), which are connected by a communication network and which interact and exchange data to provide and perform predefined tasks automatically during manufacturing and/or production processes, ***characterized in that*** the system (1) at least comprises:
- a processing unit (8) configured to capture data (D) which are generated and provided by the automation system (2) and/or the components (3, 4, 5, 6, 7) of the automation system (2) while performing the predefined tasks during operation; and
- an evaluation unit (10) configured to analyze the data (D) captured by the processing unit (8) using Artificial Intelligence methods to determine a condition of the automation system (2) and/or of at least one component (3, 4, 5, 6, 7) of the automation system (2) and/or to determine a deviation of the determined condition of the automation system (2) and/or the at least one component (3, 4, 5, 6, 7) of the automation system (2) from an expected condition of the automation system (2) and/or the at least one component (3, 4, 5, 6, 7) of the automation system (2), and to derive actions from the determined condition and/or the determined deviation for the automation system (2) and/or the at least one component (3, 4, 5, 6, 7) of the automation system (2).

13. The system (1) according to claim 12, ***characterized in that*** the processing unit (8) is configured to preprocess the data (D) received from the automation system (2) and/or the components (3, 4, 5, 6, 7) of the automation system (2).

14. The system (1) according to claim 12 or 13, ***characterized in that*** the evaluation unit (10) is implemented and executable on the processing unit (9) and/or that the evaluation unit (10) is implemented as a cloud-based application being executable on a cloud server.

15. The system (1) according to any of claims 12 to 14, ***characterized in that*** the processing unit (8) is implemented as separate unit, which is linked to the automation system (2), in particular to a higher-level control unit (7) of the automation system (2), via a communication connection, ***or that*** the processing unit (8) is integrated into the higher-level control unit (7) of the automation system (2).

16. The system (1) according to any of claims 12 to 15, ***characterized in that*** the processing unit (8) is designed as so-called Edge device.

17. The system (1) according to any of claims 12 to 16, ***characterized in that*** the system (1) comprises a storage unit (9) for storing the data (D) at least captured by the processing unit (8), wherein the storage unit (9) is linked to the processing unit (9) via a communication connection (12).

18. The system (1) according to claim 17, ***characterized in that*** the storage unit (9) is designed as database.

19. The system (1) according to any of claims 12 to 18, ***characterized in that*** the system (1) comprises a display unit (11) being configured to output and display at least the condition of the automation system (2) and/or the at least one component (3, 4, 5, 6, 7) of the automation system (2) determined by the evaluation unit (10) and/or the deviation of the determined condition of the automation system (2) and/or the at least one component (3, 4, 5, 6, 7) of the automation system (2) from an expected condition, determined by the evaluation unit (10).

20. The system (1) according to claim 19, ***characterized in that*** the display unit (11) is designed as local display unit and/or the display unit (11) is designed as cloud-based application having a web-based user-interface hosted on a cloud server.
